# EUROPEAN PATENT APPLICATION

(11) **EP 2 669 562 A2**
(43) Date of publication of application: **04.12.2013**
(21) Application number: 13168790.7
(22) Date of filing: 22.05.2013
(51) Int. Cl.: F16L 33/06

(54) **Clamping means and method of use thereof**

(30) Priority: 31.05.2012 GB 201209696
(71) Applicant: Teconnex Ltd, Keighley, BD21 4LG (GB)
(72) Inventor: Dobson, Neil, Bradford, BD21 4LG (GB)
(74) Representative: Tomkinson, Alexandra

(57) **Abstract**

Clamping means are provided which include a substantially annular outer clamping member (4) having two substantially opposite free ends (8, 10) and engagement means provided on or associated with said two opposite free ends to allow the diameter of the outer clamping member (4) and/or distance between the two free ends (8, 10) to be adjusted and/or maintained in a required position in use. The clamping means includes at least one substantially annular inner clamping member (6) that is located substantially within the annular outer clamping member (4).

## Description

This invention relates to clamping means and a method of using said clamping means.

Although the following description refers almost exclusively to clamping means in the form of a band clamp for clamping an elastomeric hose onto and/or between a turbo charger or super charger and an engine inlet on a heavy goods vehicle, it will be appreciated by persons skilled in the art that the clamping means of the present invention can be used to clamp any two or more items together in use.

Band clamps have conventionally been used to secure an elastomeric hose onto one or more nozzles provided between a turbo charger and an engine inlet of a heavy goods vehicle. An example of a band clamp typically includes a substantially annular clamping band having two opposite free ends. Straps are provided adjacent the two free ends and an engagement nut and bolt is provided between the straps to allow adjustment of the clamping distance provided between the two opposite free ends and thus the clamping force provided by the band clamp.

The band clamp provides a clamping load onto the outer surface of the elastomeric hose by reducing its diameter and providing a compressive strain on the clamping surface of the elastomeric hose material. Problems associated with this conventional band clamp design are that due to the high temperatures in which the elastomeric hose is operating under in use, the elastomeric hose starts to perish over time and reduces in thickness. This in turn reduces the clamping force applied by the band clamp to the elastomeric hose. Over time, this can result in the hose becoming detached from the nozzle, thereby causing loss of power to the heavy goods vehicle. In addition, since elastomeric hoses are generally made from low friction materials, such as for example silicone rubber, the hoses have a tendency to slip off the nozzles in which they are placed in use.

It is therefore an aim of the present invention to provide clamping means which overcome the abovementioned problems.

It is a further aim of the present invention to provide a method of using clamping means that overcome the abovementioned problems.

According to a first aspect of the present invention there is provided clamping means, said clamping means including a substantially annular outer clamping member having two substantially opposite free ends and engagement means provided on or associated with said two opposite free ends to allow the diameter of the outer clamping member and/or distance between the two free ends to be adjusted and/or maintained in a required position in use, **characterised in that** the clamping means includes at least one substantially annular inner clamping member that is located substantially within the annular outer clamping member.

The applicants have found that by providing at least a second inner clamping member, this increases the clamping force that is provided by the clamping means when in a clamped position, even if there is a change in diameter and/or one or more dimensions of the item or items on which the clamping means is being used to clamp in use.

The outer clamping member is typically movable between a clamped position, wherein the engagement means are typically in an engaged position, and an unclamped position, wherein the engagement means are typically in a disengaged position.

Preferably the at least one inner clamping member is arranged so that one or more of the dimensions, such as for example the diameter of the same, is capable of self-adjustment in use.

Preferably the at least one inner clamping member is arranged so as to be resiliently biased outwardly of its substantially annular form (i.e. the resilient biasing force is against the outer clamping member).

Thus, in one embodiment, the outer clamping member provides an inwardly biasing force in use as a result of the free ends of the outer clamping member being drawn together. The at least one inner clamping member provides an outwardly biasing force as a result of the resilient bias of the same. The forces of the inner and outer clamping members act together to retain the clamping means on the item or items in use when in the clamped position.

In one embodiment the at least one inner clamping member has two free ends and the free ends of at least one of said inner clamping members are preferably provided in a substantially overlapping arrangement when the clamping means is in the clamped and/or in the unclamped positions.

Preferably the free ends or overlapping free ends of the at least one inner clamping member are movable relative to each other and/or are freely slidable over each other as the clamping distance and/or clamping force provided by the outer clamping member changes or is adjusted in use and/or one or more dimensions of the item being clamped by the clamping means changes or is adjusted in use. The ability for the free ends or overlapping free ends of the at least one inner clamping member to move, at least in part, provides the resilient biasing force of said at least one inner member. In addition, the ability for the free ends or overlapping free ends of the at least one inner clamping member to automatically adjust the degree or distance between them or of the overlap ensures that a required clamping force can be maintained by the clamping means on an item during use without manual adjustment of the clamping means or outer clamping member.

Preferably the degree of overlap of the free ends of at least one of the inner clamping members is such that the ends remain in overlapping contact when the engagement means for the first outer clamping member is at its limits of engaged and/or disengaged positions (i.e. when the diameter of the outer clamping member is at its maximum and/or minimum).

Preferably the overlap or position of the free ends of the at least one inner clamping member is also sufficient to allow the clamping means to be placed around the item on which it is to be used to clamp in use and/or such that it does not significantly interfere with the engagement means in use.

Preferably the at least one inner clamping member is formed from an elongate band of material that is coiled to form the substantially annular shape and/or shape with or without the overlapping free ends.

Preferably the substantially annular shape of the at least one inner clamping member is typically maintained by engagement of at least one of the inner clamping members with the inner surface of the substantially annular outer clamping member in use.

Preferably the at least one inner clamping member is detachably held in place by the outer clamping member via friction. However, securing means could be provided to retain the at least one inner clamping member with the outer clamping member and/or one or more other inner clamping members in use if required providing the free ends of the inner clamping member(s) are movable relative to each other.

Preferably the at least one inner clamping member has an inner surface that faces towards or abuts with the one or more items to be clamped in use and an outer surface that faces towards or abuts with the outer clamping member.

Preferably the inner clamping surface and/or outer surface of the at least one inner clamping member is/are profiled or non-smooth and further preferably the profiling includes one or more ridges or protrusions.

The ridge or protrusion can be any suitable shape but preferably it is substantially curved or U-shaped in form.

In one embodiment the inner clamping surface and/or outer surface of the at least one inner clamping member has two or at least two ridges or protrusions provided thereon. Preferably each ridge or protrusion is provided at or adjacent a or each peripheral edge of the at least one inner clamping member. Preferably a recess or relatively flat portion is defined between the two ridge or protrusion portions. For example, the recess portion could be provided substantially centrally of the at least one inner clamping surface.

The one or more ridges or protrusions are preferably provided circumferentially around substantially the whole or a part of the inner and/or outer surface of the at least one inner clamping member or the one or more ridges or protrusions are provided substantially parallel to the longitudinal axis of the elongate band of material from which the at least one inner clamping member may be formed.

In one embodiment the one or more ridges or protrusions are formed by a stamping and/or rolling process.

Preferably at least part of the outer surface of at least one inner clamping member engages with, abuts against or is in contact with an inner surface of the outer clamping member in use.

Preferably the outer surface of the at least one inner clamping member is profiled. Further preferably the outer surface of the at least one inner clamping member has one or more protrusions or ridges provided thereon.

In one embodiment at least two inner clamping members are provided.

Preferably at least part of the profiled or non-smooth inner surface of one of the inner clamping members engages with at least part of the profiled or non-smooth outer surface of another or the other inner clamping member.

Preferably the profiles of the at least two inner clamping members are substantially aligned, such that the one or more protrusions, ridges and/or recesses of the inner clamping members are provided in substantially overlapping or engaged relationship.

Preferably the dimensions of the profiled or non-smooth surfaces and/or the one or more protrusions or ridges of the at least two inner clamping members are different. This ensures a gap or space is provided between at least part of the outer surface of one of the inner clamping members and at least part of the inner surface of another or the other inner clamping member. This allows a degree of flexing, movement and/or shape change of the inner clamping members relative to each other and/or relative to the outer clamping member in use.

In one embodiment the dimensions of the profiled surface of the outermost or intermediate inner clamping member are larger and/or the depth of the one or more protrusions and/or ridges are deeper relative to the dimensions of the profiled surface of the inner or innermost inner clamping member.

The ratio of the different dimensions of the profiled surfaces of the inner clamping members is important in determining the degree of resilience and/or flexing of the inner clamping members and thus the clamping force provided by the inner clamping members on an item in use. This ratio can therefore be adjusted according to the clamping load required by the clamping means.

In the embodiment where there are two or more inner clamping members. Preferably the free ends of the innermost inner clamping member are provided in overlapping relationship. The free ends of one or more outer or intermediate inner clamping members are preferably in overlapping relationship but can be in non-overlapping relationship if required.

In one embodiment the inner surface of the outer clamping member is substantially smooth or non-profiled. The inner surface of the outer clamping member typically engages with an outer surface of at least one of the inner clamping members.

In a preferred embodiment there is provided an outer clamping member with a substantially smooth or non-profiled inner surface, and two profiled or non-smooth inner clamping members.

In one embodiment the inner surface of the outer clamping member is profiled or non-smooth. Further preferably the inner surface of the outer clamping member includes one or more protrusions or ridges. In this embodiment one inner clamping member could be provided or two or more inner clamping members could be provided.

Preferably the one or more ridges or protrusions are provided circumferentially around the outer clamping member.

In a preferred embodiment the inner surface of the outer clamping member includes two protrusions or ridges. Preferably each ridge or protrusion is provided adjacent a peripheral edge of the outer clamping member. Preferably a recess portion is defined between the two ridge or protrusion portions. For example, the recess portion could be provided substantially centrally of the outer clamping surface.

In one embodiment at least part of the profiled inner surface of the outer clamping member engages with at least part of the profiled outer surface of one of the at least one inner clamping members.

Typically the profiles of the outer clamping member and one or more of the at least one inner clamping member are substantially aligned, such that the one or more protrusions, ridges and/or recesses of the outer and inner clamping members are provided in substantially overlapping or engaged relationship.

Preferably the dimensions of the profiled surfaces of the outer clamping member and one or more of the at least one inner clamping member are different. This ensures a gap is provided between at least the outer surface of the profiled inner clamping member and the inner surface of the profiled outer clamping member to allow a degree of flexing, movement and/or shape change of the at least one inner clamping member relative to the outer clamping member in use.

Preferably the dimensions of the profiled surface of the outer clamping member are larger and/or the depth of the one or more protrusions or ridges are deeper relative to the dimensions of the profiled surface(s) of one or more of the at least one inner clamping member and/or depth of the one or more protrusions or ridges of an inner clamping member with which it is adjacent to or partially abutting with.

The ratio of the dimensions of the profiled inner surface of the outer clamping member and the profiled outer surface of the at least one inner clamping member is important in determining the degree of resilience and/or flexing of the at least one inner clamping member and thus the clamping force provided by the at least one inner clamping member on an item in use.

The outer clamping member and/or at least one inner clamping member can be formed from any or any combination of materials but is preferably formed from a metal and further preferably from stainless steel. The material(s) from which the at least one inner and/or outer clamping members are formed is typically such that the clamping members can withstand the range or ranges or temperature that they are likely to encounter during use of the clamping means. For example, in one embodiment the clamping means is for use on or near a turbo charger or super chargers on heavy goods vehicles and therefore must withstand relatively high temperatures.

In a preferred embodiment the at least one inner clamping member and/or outer clamping member is formed from fully hard 304 stainless steel.

Preferably the free ends and/or straps associated with the free ends of the outer clamping member can be brought substantially into engagement and/or abutment with each other in use.

Preferably the engagement means of the outer clamping member include one or more trunnions, nuts and bolts, clips, straps and/or the like.

In one embodiment a single engagement means is provided on or associated with the outer clamping member.

In an alternative embodiment two or more engagement means are provided on or associated with the outer clamping member. The forces applied by the clamping means with two or more engagement means allows lower torque on the engagement means and prevents or reduces "crushing" of the one or more items with which the clamping means is used on when in a clamped position.

In one embodiment at least two protrusions are formed on an inner clamping member. Preferably at least one protrusion is provided at or adjacent each peripheral or circumferential edge of the inner clamping member. Preferably a single recess is provided between the peripheral or circumferential protrusions.

In one embodiment at least four protrusions are provided on an inner clamping member. Preferably at least two protrusions are provided at or adjacent each peripheral or circumferential edge of the inner clamping member. A recess is preferably provided between the at least two protrusions adjacent the edge. A further recess is preferably provided between the two pairs or sets of edge protrusions.

Preferably the outer clamping member is in the form of a band clamp.

In one embodiment the clamping means is for use in clamping one or more items in the form of an elastomeric hose onto one or more other items, such as for example a turbo charger or supercharger.

In one embodiment the clamping means is for use in clamping two or more substantially cylindrical members together.

In one embodiment the outer clamping member has a greater thickness or depth than one or more of the inner clamping members. This provides the clamping means with added strength and greater spring or resilience. The thinner one or more inner clamping members can act as a "sealing" ring to form a seal between the clamping means and the item on which the clamping means is used. The thinner the inner clamping member is the greater the sealing effect provided by the inner clamping member tends to be.

Thus, the clamping means in one embodiment can provide a clamping force to hold one item onto another item. In one embodiment the clamping means can act as a bridging or sealing member between two or more items being clamped together.

According to a second aspect of the present invention there is provided a method of using clamping means, said clamping means including a substantially annular outer clamping member having two substantially opposite free ends, said method including the steps of adjusting engagement means provided on or associated with said two opposite free ends to allow the diameter of the outer clamping member and/or distance between the two free ends to be adjusted and/or maintained in a required position in use, **characterised in that** the clamping means includes at least one substantially annular inner clamping member that is located substantially within the annular outer clamping member.

Embodiments of the present invention will now be described with reference to the accompanying figures, wherein:
Figure 1 is a perspective view of a band clamp according to an embodiment of the present invention;
Figure 2 is a perspective view taken through a cross section of the band clamp in figure 1;
Figure 3 is perspective view of the inner clamping member in figures 1 and 2;
Figure 4 is an exploded view of the band clamp in figure 1;
Figure 5 is a perspective view of a band clamp according to a further embodiment of the present invention;
Figure 6 is a perspective view taken through a cross section of the band clamp in figure 5; and
Figure 7 is an exploded view of the band clamp in figure 5.

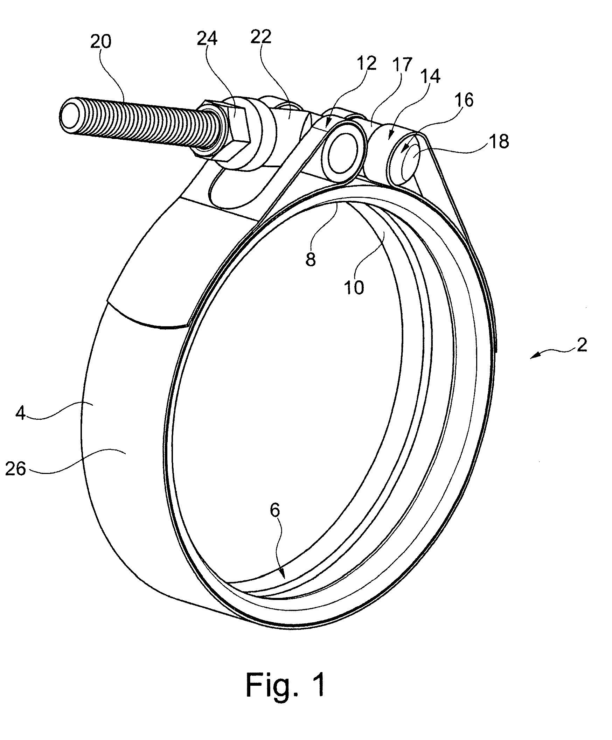

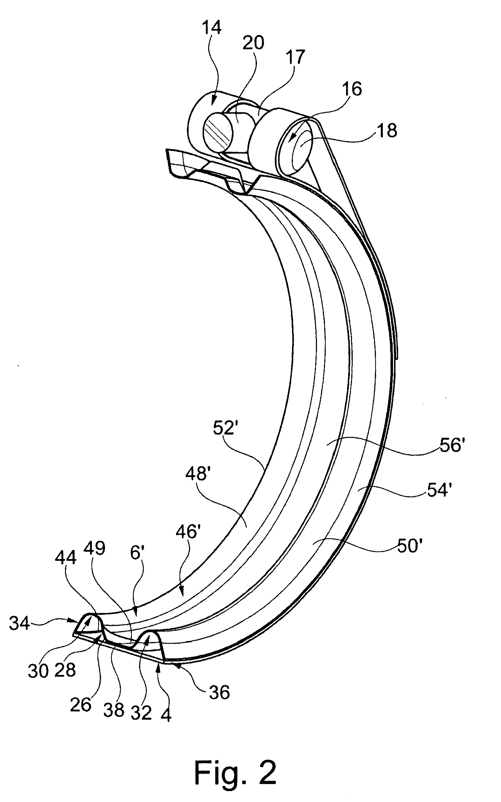

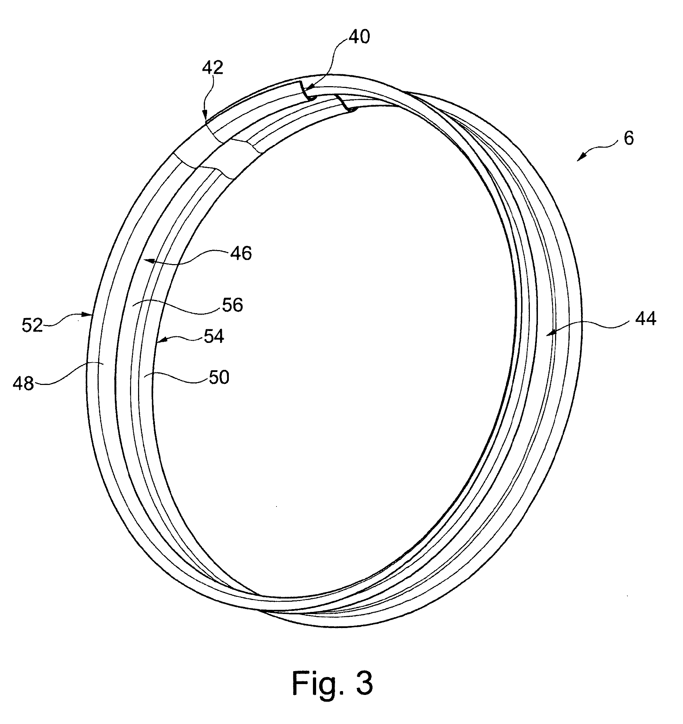

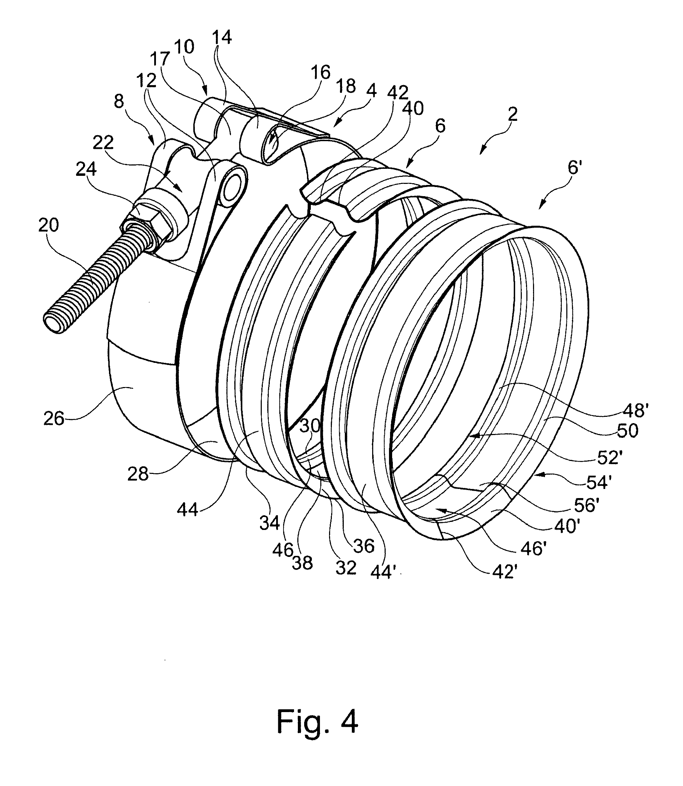

Referring to figures 1-4, there is illustrated a band clamp 2 according to an embodiment of the present invention for clamping an elastomeric hose onto an item in use.

The band clamp 2 includes an outer clamping member 4 and two inner clamping members 6, 6'. The outer clamping member 4 is substantially annular in shape having a first free end 8 provided substantially opposite to a second free end 10. Strap elements 12, 14 are provided adjacent free ends 8, 10 respectively to allow engagement means to be provided between the free ends. The engagement means allows the distance between the free ends 8, 10 to be adjusted and/or maintained in a required position in use.

In the illustrated example, the engagement means is in the form of a trunnion 16. The trunnion 16 has a body portion 17 including two side protrusions 18 which are held in position by strap element 12. A threaded bolt element 20 of trunnion 16 extends outwardly from body portion 17 and is located through an engagement member 22 held in position by strap element 12. A bolt 24 is threadingly engaged on threaded bolt element 20 to allow adjustment of the distance between the free ends 8, 10 in use.

The outer clamping member 4 has a substantially smooth outer surface 26 and in this embodiment a substantially smooth inner surface 28. It will be appreciated in that in some embodiments, the inner surface of the outer clamping member can be profiled and this profiled surface can be used in combination with a single inner clamping member 6 or two or more inner clamping members as required.

The inner clamping members 6, 6' are each substantially annular in shape having overlapping free ends 40, 42 and 40', 42' respectively. The distance by which ends 40, 42 and ends 40', 42' overlap ensures the ends remain in overlapping relationship when the free ends 8, 10 of the clamping member are at their maximum and/or minimum distance apart. It is preferable that the innermost inner clamping member 6' has overlapping free ends 40', 42' but it is not essential the free ends 40, 42 of the outer or intermediate clamping member 6 overlap.

The intermediate inner clamping member 6 has an outer surface 44 and an inner surface 46. The innermost clamping member 6' has an outer surface 44' and an inner surface 46'. The inner surface 46' is typically a clamping surface in that it engages with the outer surface of the elastomeric hose in use. At least part of the outer surface 44' of clamping member 6' engages with the inner surface 46 of intermediate inner clamping member 6. At least part of the outer surface 44 of intermediate inner clamping member 6 engages with the inner surface 28 of the outer clamping member 4 in use.

Both the outer surfaces 44, 44' and the inner surfaces 46, 46' of inner clamping members 6, 6' are profiled. In particular, innermost inner clamping member 6' has a curved ridge or inwardly pointing protrusion 48', 50' provided adjacent each of the peripheral edges 52', 54' of the inner clamping member 6' respectively. An inwardly opening recess or relatively flat section 56' is provided between the curved ridges 48', 50'. The profiled inner surface 46 of intermediate inner clamping member 6 comprises two substantially curved ridges or inwardly pointing protrusions 30, 32 provided adjacent the peripheral edges 34, 36 of the clamping member 6. An inwardly opening recess or relatively flat section 38 provided between said ridge portions 30, 32.

The dimensions of the profiled surfaces of the two inner clamping members 6, 6' are different so as to provide a gap between at least some parts of the inner clamping members and thus allow flexing of the inner clamping members 6, 6' relative to each other and to the outer clamping member 4. In the illustrated example, the depth or height of the ridge portions 30, 32 of intermediate inner clamping member 6 are greater than the depth or height of the ridge portions 48', 50' of innermost clamping member 6'. As such a gap 49 is defined between the flat section 38 of clamping member 6 and flat section 56' of clamping member 6'.

During manufacture, the inner clamping members 6, 6' are inserted within the outer clamping member, such that ridge portions 30, 32 of inner clamping member 6 are brought into engagement with ridge portions 48, 50, of inner clamping member 6'. The outer profiled surface 44 of intermediate inner clamping member 6 is brought into engagement with the inner smooth surface 28 of outer clamping member 4, thereby maintaining the inner clamping members 6, 6' in engaging relationship with each and with outer clamping member 4. The inner clamping members 6, 6' can undergo a degree of slidable movement relative to each other and to the outer clamping member 4 to allow movement of the free ends 40, 42 and 40', 42' of the inner clamping members 6, 6' relative to each other in use respectively.

In use, the band clamp 2 is located around the elastomeric hose and the item to which the hose is to be attached to in use, such that the profiled inner surface 46' of innermost inner clamping member 6' engages against the outer surface of the elastomeric hose. The nut 24 is adjusted relative to bolt 20 to move the band clamp into tight engagement on the hose and set a required clamping load for the band clamp on the hose. The curved ridge portions 48', 50' of the inner clamping member 6' provide a gripping or compressive force on the elastomeric hose to maintain the hose in position on the item, such as a solid nozzle in use.

The provision of the two inner clamping members 6 that have a degree of resilience, that can move relative to each of their free ends, to each other and to outer clamping member 4, ensures that clamping of the elastomeric hose is maintained, even if the size of the elastomeric hose to which the band clamp is engaged to decreases over time. Thus, the provision of the inner clamping members allows the band clamp to compensate for changes in one or more dimensions of the item to which it is clamping in use.

The inner clamping members 6, 6' are placed under compression within the outer clamping member 4 and the coiled or overlapping nature of the inner clamping members allows potential energy to be stored therein. As the dimensions of the hose decreases over time, the potential energy is gradually released from the inner clamping members as the overlap of the free ends of each inner clamping member decreases (slidably moves) and the inner clamping member deforms radially. This maintains the clamping force of the profiled inner surfaces 46, 46' of the inner clamping members 6 on the hose and each other in use. This in turn prevents buckling of the hose and therefore promotes a highly reliable clamp for the hose.

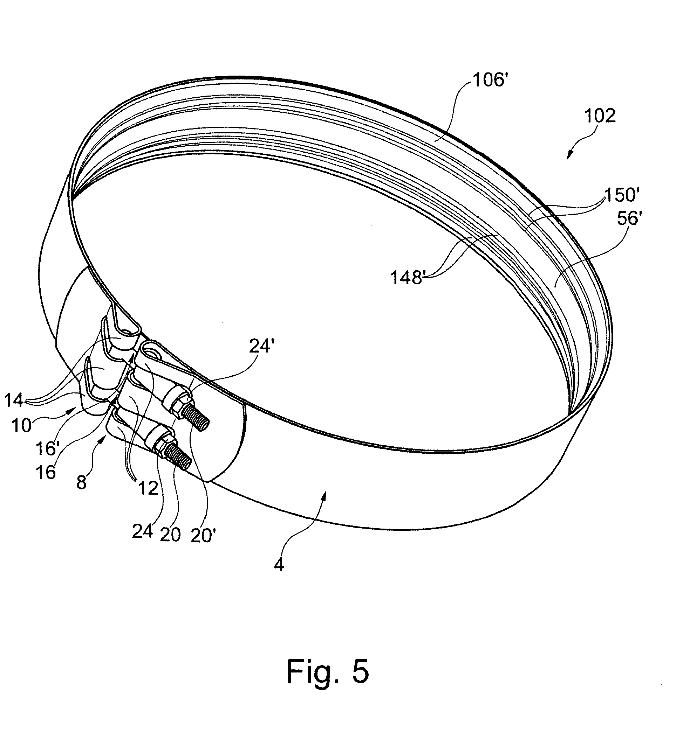

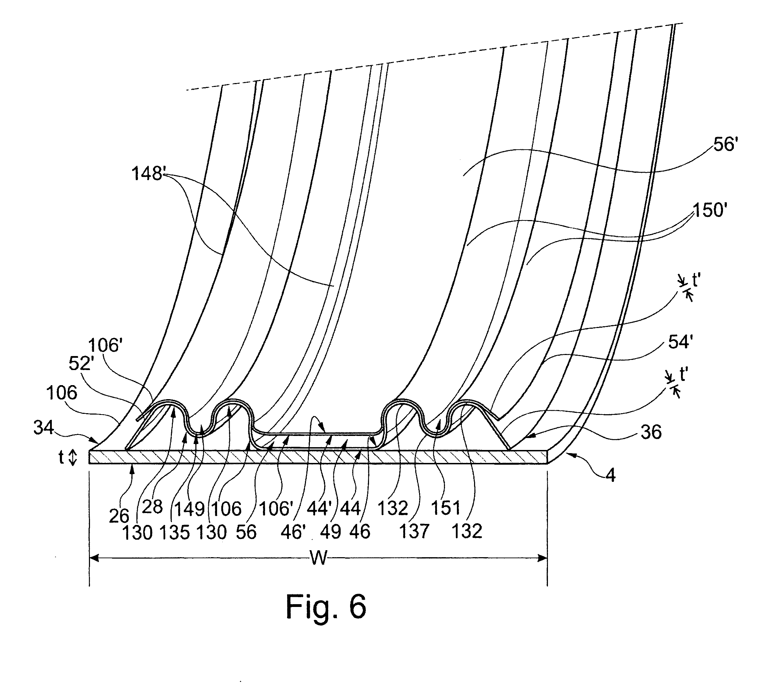

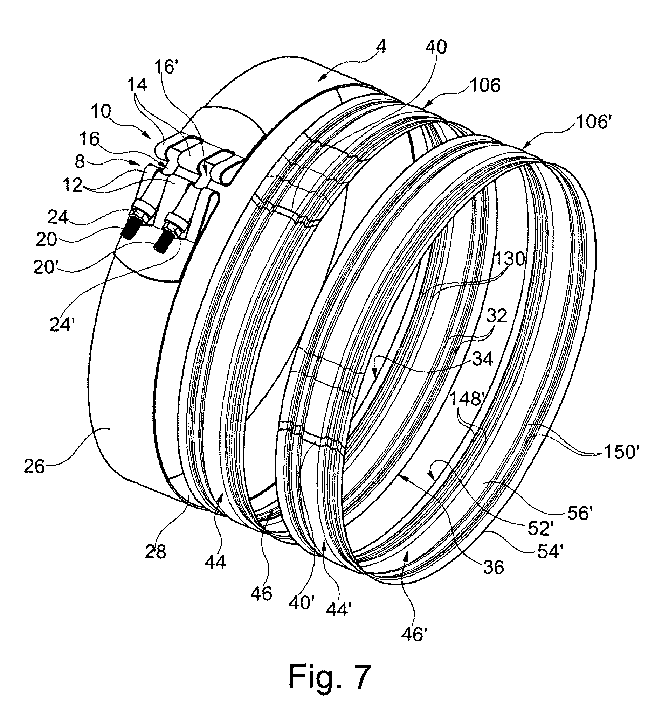

Referring to figures 5-7, there is illustrated a band clamp 102 according to a second embodiment of the present invention for clamping two substantially cylindrical items together in use. The same reference numerals have been used to describe the same features as in the first embodiment.

The second embodiment differs from the earlier described first embodiment in that the outer clamping member 4 has a greater thickness t compared to the thicknesses t', t" of the two inner clamping members 106, 106' to provide greater strength to the clamp and to allow at least the innermost inner clamping member 106' to act as a seal or bridging member between the two items being clamped. The thinner inner clamping members 106, 106' also provide a greater resilience or spring like effect providing an improved clamping force on the items being clamped. The thinner the inner clamping members 106, 106' the greater the seal is likely to be with the two items being clamped in use.

In addition, the width w of the band clamp 102 is typically greater than the width of the band clamp 2 in the first embodiment, thereby allowing more engaging ridges to be provided on the inner clamping members. In particular, inner surface 46' of innermost inner clamping member 106' has a pair of curved ridges or protrusions 148', 150' provided adjacent each peripheral edge 52', 54'. An inwardly opening curved recess 149, 151 is provided between each curved ridge 148' and 150' of each pair. An inwardly opening recess or relatively flat section 56' is provided between the pairs of curved ridges 148', 150'. The profiled inner surface 46 of intermediate clamping member 106 comprises a pair of curved ridges or protrusions 130, 132 provided adjacent each peripheral edge 34, 36 of the clamping member 106. An inwardly opening curved recess 135, 137 is provided between each curved ridge 130 and 132 of each pair. An inwardly opening recess or relatively flat section 56 is provided between the pairs of curved ridges 130, 132. A gap 49 is defined between the flat sections 56, 56' as in the first embodiment.

Two engagement means in the form of two adjacent and substantially parallel trunnions 16, 16' are provided on the band clamp 102 to provide sufficient clamping force to the clamp in use.

## Claims

1. Clamping means, said clamping means including a substantially annular outer clamping member having two substantially opposite free ends and engagement means provided on or associated with said two opposite free ends to allow the diameter of the outer clamping member and/or distance between the two free ends to be adjusted and/or maintained in a required position in use, **characterised in that** the clamping means includes at least one substantially annular inner clamping member that is located substantially within the annular outer clamping member.

2. Clamping means according to claim 1 **characterised in that** an inner surface of the outer clamping member is substantially smooth or has a non-profiled surface and the inner surface(s) of the at least one inner clamping member is profiled or non-smooth.

3. Clamping means according to claim 1 **characterised in that** an inner surface of the outer clamping member is profiled or non-smooth and the inner surface(s) of the at least one inner clamping member is profiled or non-smooth.

4. Clamping means according to claim 1 **characterised in that** that at least one inner clamping member has two free ends and said free ends on at least one of said inner clamping member(s) are movable relative to each other and/or relative to the outer clamping member in use.

5. Clamping means according to claim 4 **characterised in that** the two free ends of at least one inner clamping member are provided in overlapping relationship with each other in use.

6. Clamping means according to claim 1 **characterised in that** a profiled surface of the inner and/or outer clamping member or an inner surface of the at least one inner clamping member has at least one ridge or protrusion provided thereon.

7. Clamping means according to claim 6 **characterised in that** at least one ridge or protrusion is provided at or adjacent each peripheral edge of said clamping member(s).

8. Clamping means according to claim 7 **characterised in that** a recess or relatively flat portion is defined between the at least two ridges or protrusions on said clamping member(s).

9. Clamping means according to claim 6 **characterised in that** the at least one ridge or protrusion is provided circumferentially around substantially a whole or part of the said clamping member(s).

10. Clamping means according to claim 1 **characterised in that** at least two inner clamping members are provided.

11. Clamping means according to claim 10 **characterised in that** at least part of a profiled inner surface of one of the inner clamping member engages with at least part of a profiled outer surface of another or the other inner clamping member, such that the profiled surfaces of the at least two inner clamping members are substantially aligned and/or in engagement with each other.

12. Clamping means according to claims 6 or 11 **characterised in that** dimensions of the profiled surfaces of the two inner clamping members and/or the dimensions of the profiled surfaces of inner and outer clamping members are different, thereby forming a gap or space between at least part of an outer surface of one of the clamping members and at least part of an inner surface of another or the other clamping member.

13. Clamping means according to claim 12 **characterised in that** the dimensions of an outer clamping member are larger and/or the depth of the one or more protrusions or ridges are deeper relative to the dimensions of the profiled surface of an inner clamping member with which it engages with in use.

14. Clamping means according to claim 6 **characterised in that** at least a pair of protrusions or ridges are provided at or adjacent each peripheral edge of the clamping member(s), with a recess defined between each protrusion or ridge of the pair.

15. Clamping means according to claim 1 **characterised in that** the material from which the outer clamping member is formed has a greater thickness than the material from which at least one of the inner clamping members is formed.

16. A method of using clamping means, said clamping means including a substantially annular outer clamping member having two substantially opposite free ends, said method including the steps of adjusting engagement means provided on or associated with said two opposite free ends to allow the diameter of the outer clamping member and/or distance between the two free ends to be adjusted and/or maintained in a required position in use, **characterised in that** the clamping means includes at least one substantially annular inner clamping member that is located substantially within the annular outer clamping member.
